# EUROPEAN PATENT SPECIFICATION

(11) **EP 0 419 957 B1**
(45) Date of publication and mention of the grant of the patent: **29.12.1993**
(21) Application number: 90117663.6
(22) Date of filing: 13.09.1990
(51) Int. Cl.: B60R 22/48

(54) **Device preventing a failure to connect the safety belt of an industrial vehicle**
Vorrichtung, die es verhindert, dass in einem Nutzfahrzeug der Sicherheitsgurt nicht angelegt wird
Dispositif pour éviter l'impossibilite de rattacher la ceinture de sécurité sur un véhicule industriel

(30) Priority: 26.09.1989 IT 5336589
(43) Date of publication of application: 03.04.1991
(73) Proprietor: IVECO FIAT S.p.A., 10156 Torino (IT)
(72) Inventor: Ropolo, Bruno, I-14010 San Paolo Solbrito (IT); Savio, Piero, I-10040 Borgaretto (IT)
(74) Representative: Prato, Roberto

(56) References cited:
- GB-A- 1 589 401
- US-A- 3 781 497

## Description

The present invention relates to a device preventing a failure to connect the safety belt of an industrial vehicle.

As is known, recent regulations have made it compulsory for almost all drivers to use safety belts. Despite this legislation some drivers fail to connect their safety belts through forgetfulness or negligence. Optical or acoustic warning devices (such as that disclosed in US-A-3 781 497) are known which inform the driver that the safety belt has not been buckled.

Not enough attention is always paid to these known devices and for this reason their use is normally not very effective.

The object of the present invention is to provide a safety device which is actuated whenever the safety belt is not connected so as to force the driver of the vehicle to connect the belt.

The present invention provides a device preventing a failure to connect a safety belt of an industrial vehicle characterized in that it comprises actuator means adapted to be disposed below a seat of the industrial vehicle so as to adjust the position of this seat between a first correct operational position for driving and a second operational position unsuitable for driving, sensor means adapted to be installed in the belt and to emit a signal as a function of the correct connection of the safety belt and means for regulating the position of these actuator means, these regulation means being controlled by the sensor means in order to position the seat in the first operational position only when the safety belt is correctly connected.

The invention is described below with reference to the attached drawings which show a non-limiting embodiment thereof and in which:
Fig. 1 shows, partly in side view and partly in diagrammatic form, a safety system according to the present invention;
Fig. 2 is a top view of a detail of Fig. 1;
Fig. 3 shows, partly in side view and partly in diagrammatic form, the safety system shown in Fig. 1 in a further position of use.

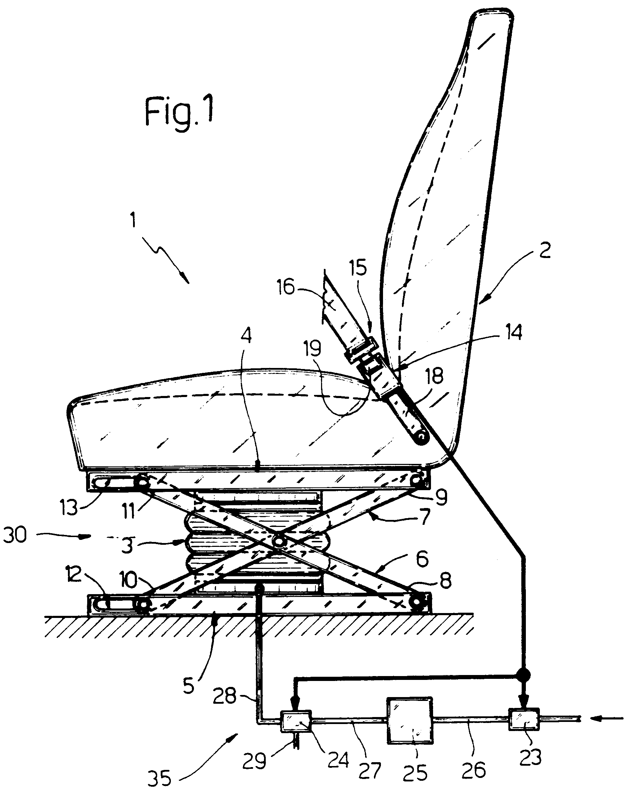

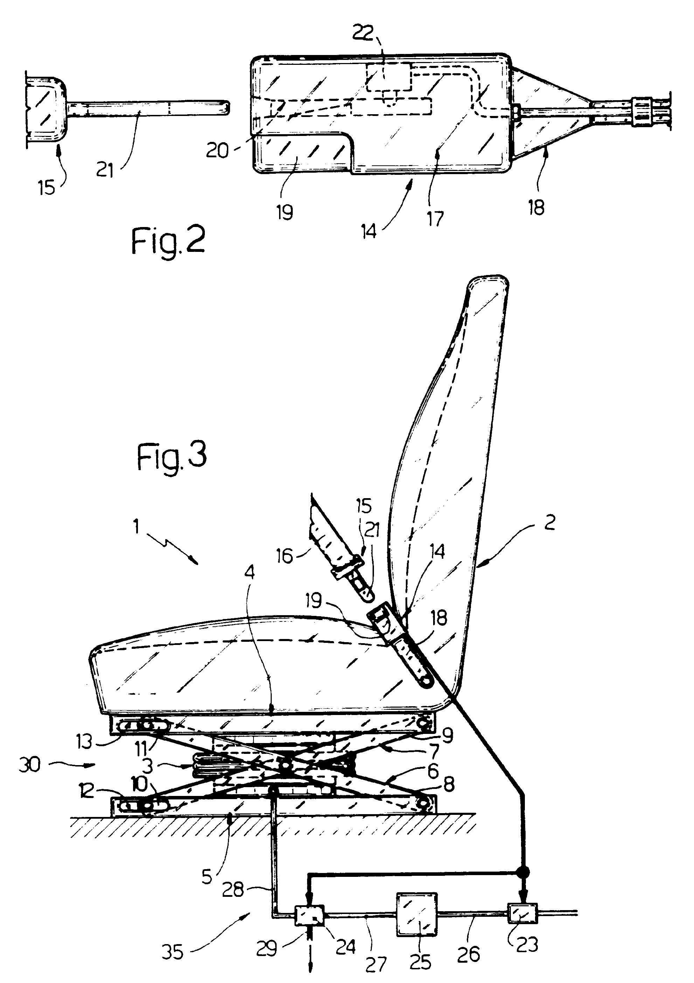

In the drawings, in particular Figs. 1 and 3, a prevention device of the present invention is shown overall by 1 and controls the position of a seat 2 of a vehicle, preferably an industrial vehicle.

The device 1 comprises an air spring 3 located in use below the seat 2 so as to adjust its position between a first operational position (Fig. 1) suitable for driving and a second operational position (Fig. 3) unsuitable for driving. The device 1 is also provided with a support unit 30 for the seat 2 essentially formed by horizontal guides 4, 5 adapted to be secured to the seat 2 and the floor of the vehicle in question respectively. The opposite ends of the guides 4, 5 are connected by respective arms 6,7 disposed in the shape of an X and hinged at their centre.

The arms 6 and 7 have first ends 8 and 9 hinged on the guides 5 and 4 and second ends 10 and 11 which slide in openings 12 and 13 provided in the guides 5 and 4 respectively.

A detachable fastening 14 for a safety belt is disposed in use in a position adjacent to the seat 2; a buckle 15, connected to the web of a safety belt 16, is snap-locked in this fastening.

The detachable fastening 14 comprises in particular (see Fig. 2) a body 17 shaped substantially as a parallelepiped which is connected to a projection 18 anchoring it for example to the floor of the vehicle and has a push-button 19 for the unbuckling of the safety belt.

The body 17 is provided internally with a slot 20 in which a tongue 21 of the buckle 15 is snap-locked.

The device 1 comprises a sensor 22 (for instance a conventional microswitch) adapted to be supported by the body 17 and to generate a signal as a function of the correct buckling of the tongue 21 into the slot 20.

As shown in Figs. 1 and 3, the device is provided with a pneumatic system 35 (shown diagrammatically) actuating the air, spring 3.

The system 35 comprises an electric interception valve 23 and a three-way electric valve 24 which are controlled by electrical signals from the sensor 22. The pneumatic system also comprises a pressure regulation device 25 and can advantageously be connected to a compressed air source (not shown) provided in the vehicle.

In use, the electric valve 23 has its inlet connected to the compressed air source while its outlet communicates with the inlet of the device 25 via the duct 26. The outlet of the device 25 is connected, via the duct 27, to the inlet of the electric valve 24. The electric valve 24 has two outlets: the first outlet is connected to the air spring 23, via the duct 28, and the second outlet is connected to a discharge duct 29.

Fig. 1 shows the operation of the device 1 when the safety belt is connected.

In this operating mode, the tongue 21 is inserted within the slot 20 and the sensor 22 is activated. The sensor 22 generates electrical signals which, in a conventional manner, drive the electric valves 23 and 24. The electric valve 23 is open and the electric valve 24 brings the duct 27 into communication with the duct 28. In this way the compressed air, after passing through the electric valve 23, flows through the duct 26, the device 25 and the ducts 27 and 28 reaching the air spring 3. The air spring 3 expands and the seat 2 is raised reaching an operational position from which the vehicle can be correctly driven.

Fig. 3 shows the operation of the device 1 when the safety belt is not connected.

In this operating mode, the tongue 21 is not inserted in the slot 20 and the sensor 22 is not activated. The sensor 22 generates other electrical signals which drive the electric valves 23 and 24 in an opposite manner to that described above. The electric valve 23 is closed and the electric valve 24 brings the duct 28 into communication with the duct 29. In this way, the compressed air cannot flow into the duct 26 since the electric valve 23 is closed. The compressed air in the air spring 3 flows out through the ducts 28 and 29 and is externally discharged. The air spring consequently deflates and the seat 2 is lowered rearwardly reaching an operational position, shown in Fig. 3, from which driving is impossible.

The above description shows that the prevention device of the present invention is more efficient than the known devices: the driver is forced to attach the safety belt in order to position the seat in the correct position and therefore to be able to drive.

The prevention device provides a further important advantage in the particular case of industrial vehicles. In these vehicles the seat is in a fairly high position in the driving cabin which makes it difficult for the driver to get onto the driving seat. As described and illustrated, particularly in Fig. 3, the air spring 3 is deflated whenever the safety belt is unbuckled; this means that the seat is lowered rearwardly making it easier for the driver to get on and off the seat.

It is also evident that modifications and variants can be made to the construction of the prevention device without departing from the scope of the invention. The air spring 3 could in particular he replaced by a plurality of air springs or by equivalent actuator means (for instance fluid-operated or electro-mechanical actuator means). The same applies to the sensor 22 and the various components of the pneumatic system 35.

## Claims

1. A device preventing a failure to connect a safety belt (16) of an industrial vehicle, characterized in that it comprises actuator means (3) adapted to be disposed below a seat (2) of the industrial vehicle so as to adjust the position of this seat (2) between a first correct operational position for driving and a second operational position unsuitable for driving, sensor means (22) adapted to be installed in the belt (16) and to emit a signal as a function of the correct connection of the safety belt (16) and means (35) for regulating the position of these actuator means (3), these regulation means (35) being controlled by the sensor means (22) in order to position the seat (2) in the first operational position only when the safety belt is correctly connected.

2. A device as claimed in claim 1, characterized in that the actuator means comprise at least one air spring (3).

3. A device as claimed in claims 1 or 2, in which the safety belt (16) is provided with a fastening (14), characterized in that the sensor means (22) comprise at least sensor (22) adapted to be supported by this fastening (14).

4. A device as claimed in claim 3, characterized in that the sensor (22) is a microswitch and in that this microswitch (22) is actuated by a tongue (21) of the safety belt (16).

5. A device as claimed in claims 3 or 4 characterized in that the regulation means (35) comprise at least one electric interception valve (23) and a three-way electric valve (24), these valves (23, 24) being controlled by electrical signals from the sensor (22), the inlet of the electric interception valve (24) being adapted to be connected to a compressed air source and its outlet being connected to the inlet of the three-way electric valve (24), one way of the three-way electric valve being connected to the air spring (3) and a further way being connected to a discharge duct.

## Patentansprüche

1. Vorrichtung, die verhindert, daß der Sicherheitsgurt (16) eines Nutzfahrzeugs nicht geschlossen wird, dadurch **gekennzeichnet,** daß sie eine Betätigungseinrichtung (3) zur Anbringung unter einem Sitz (2) eines Nutzfahrzeugs und zur Einstellung der Position dieses Sitzes (2) zwischen einer ersten, korrekten Betriebsposition zum Fahren und einer zweiten, zum Fahren ungeeigneten Betriebsposition, eine Sensoreinrichtung (22) zur Anbringung an dem Gurt (16) und zur Abgabe eines Signals als Funktion der korrekten Schließung des Sicherheitsgurts (16) und eine Einrichtung (35) umfaßt, die die Position der Betätigungsvorrichtung (3) regelt, welche Regeleinrichtung (35) durch die Sensoreinrichtung (22) gesteuert wird, damit die Position des Sitzes (2) nur in die erste Betriebsposition gelangt, wenn der Sicherheitsgurt korrekt geschlossen ist.

2. Vorrichtung nach Anspruch 1, dadurch **gekennzeichnet,** daß die Betätigungseinrichtung wenigstens eine Luftfeder (3) umfaßt.

3. Vorrichtung nach Anspruch 1 oder 2, bei dem der Sicherheitsgurt (16) mit einer Befestigungseinrichtung (14) versehen ist, **dadurch gekennzeich****net,** daß die Sensoreinrichtung (22) wenigstens einen Sensor (22) umfaßt, der durch die Befestigungseinrichtung (14) getragen wird.

4. Vorrichtung nach Anspruch 3, dadurch **gekennzeichnet,** daß der Sensor (22) ein Mikroschalter ist und daß dieser Mikroschalter (22) durch eine Zunge (21) des Sicherheitsgurts (16) betätigt wird.

5. Vorrichtung nach Anspruch 3 oder 4, dadurch **gekennzeichnet,** daß die Regeleinrichtung (35) wenigstens ein elektrisches Unterbrechungsventil (23) und ein elektrisches Dreiwegeventil (24) umfaßt, daß diese Ventile (23,24) durch elektrische Signale des Sensors (22) gesteuert werden, daß der Einlaß des elektrischen Unterbrechungsventils (23) mit einer Druckluftquelle und sein Auslaß mit dem Einlaß des elektrischen Dreiwegeventils (24) zu verbinden ist, und daß ein Weg des elektrischen Dreiwegeventils mit der Luftfeder (3) und ein weiterer Weg mit einer Austrittsleitung verbunden ist.

## Revendications

1. Un dispositif pour éviter l'impossibilité d'attacher la ceinture de sécurité (16) d'un véhicule industriel, caractérisé en ce qu'il comprend des moyens d'actionnement (3) adaptés pour être disposés au dessous d'un siège (2) du véhicule industriel, de manière à régler la position de ce siège (2) entre une première position de fonctionnement correcte pour la conduite et une deuxième position de fonctionnement ne convenant pas pour la conduite, des moyens formant capteur (22) agencés pour être montés dans la ceinture (16) et pour émettre un signal en fonction du bouclage correct de la ceinture de sécurité (16), et des moyens (35) pour régler la position de ces moyens d'actionnement (3), ces moyens de réglage (35) étant commandés par les moyens formant capteur (22) pour ne positionner le siège (2) dans la première position de fonctionnement que lorsque la ceinture de sécurité est correctement attachée.

2. Un dispositif selon la revendication 1, caractérisé en ce que les moyens d'actionnement comprennent, au moins, un ressort pneumatique (3).

3. Un dispositif selon les revendications 1 ou 2, dans lequel la ceinture de sécurité (16) est pourvue d'une attache (14), caractérisé en ce que les moyens formant capteur (22) comprennent, au moins, un capteur (22) agencé pour être supporté par cette attache (14).

4. Un dispositif selon la revendication 3, caractérisé en ce que le capteur (22) est un microcontact et que ce microcontact (22) est actionné par une languette (21) de la ceinture de sécurité (16).

5. Un dispositif selon les revendications 3 ou 4, caractérisé en ce que les moyens de régulation (35) comprennent, au moins, une électro-valve d'interception (23) et une électro-valve à trois voies (24), ces valves (23, 24) étant commandées par les signaux électriques du capteur (22), l'entrée de l'électro-valve d'interception (24) étant agencée pour être reliée à une source d'air comprimé et sa sortie étant reliée à l'entrée de l'électro-valve à trois voies (24), une voie de l'éléectro-valve à trois voies étant reliée au ressort pneumatique (3) et une autre voie étant reliée à une conduite d'évacuation ou de décharge.
